# EUROPÄISCHE PATENTSCHRIFT

(11) **EP 3 294 785 B1**
(45) Veröffentlichungstag und Bekanntmachung des Hinweises auf die Patenterteilung: **15.09.2021**
(21) Anmeldenummer: 16726019.9
(22) Anmeldetag: 10.05.2016
(51) Int. Cl.: C08F 236/06, C08F 236/08, C08F 236/10, C08F 236/12, B60C 1/00, B29B 7/74, C08F 120/14, C08F 293/00

(54) **RAFT-AGENS, VERFAHREN ZUR POLYMERISATION, POLYMER UND KAUTSCHUKMISCHUNG SOWIE DEREN VERWENDUNG**
RAFT AGENT, POLYMERIZATION METHOD, POLYMER, RUBBER MIXTURE, AND USE THEREOF
AGENT DE TRANSFERT RAFT, PROCÉDÉ DE POLYMÉRISATION, POLYMÈRE AINSI QUE MÉLANGE DE CAOUTCHOUC ET SON UTILISATION

(30) Priorität: 12.05.2015 DE 102015208810
(43) Veröffentlichungstag der Anmeldung: 21.03.2018
(73) Patentinhaber: Continental Reifen Deutschland GmbH, 30165 Hannover (DE)
(72) Erfinder: HERZOG, Katharina, 31177 Harsum (DE); MÜLLER, Lena, 31714 Lauenhagen (DE); RECKER, Carla, 30167 Hannover (DE); PRUSS, Noa, 60598 Frankfurt (DE); VANA, Phillipp, 37581 Bad Gandersheim (DE); CONRAD, Cathrin Sonja, 34346 Hannoversch Münden (DE)
(74) Vertreter: Continental Corporation
(86) Internationale Anmeldenummer: PCT/EP2016/060384
(87) Internationale Veröffentlichungsnummer: WO 2016/180805

(56) Entgegenhaltungen:
- EP-A1- 1 801 158
- EP-A1- 2 851 377
- WO-A2-2012/069403
- US-A1- 2010 184 922
- US-A1- 2012 004 381
- US-A1- 2013 165 587
- US-A1- 2014 148 554
- US-A1- 2014 343 192
- US-B2- 7 528 204

## Beschreibung

Die Erfindung betrifft ein RAFT-Agens, ein Verfahren zur Polymerisation von Dienen und/oder ungesättigten Vinyl-Verbindungen und/oder Vinyliden-Verbindungen unter Verwendung wenigstens eines RAFT-Agens, ein Polymer, welches durch das Verfahren hergestellt ist, eine schwefelvernetzbare Kautschukmischung sowie die Verwendung der schwefelvernetzbaren Kautschukmischung zur Herstellung von Fahrzeugluftreifen, Gurten, Riemen oder Schläuchen.

Der "Reversible Addition Fragmentation Chain Transfer"-Prozess (RAFT) ist eine vielversprechende Methode zur Durchführung kontrolliert radikalischer Polymerisationen. Die strukturelle Anbindung des Polymeren an der Oberfläche kann durch die Wahl und den chemischen Aufbau der so genannten RAFT-Agenzien gesteuert werden, wie u.a. in der DE 69808622 T3 beschrieben ist.

Die US 2010/0184922 A1 offenbart ein Verfahren zur Herstellung eines organischanorganischen Nanocomposits, wobei hierzu ein nanoskaliges spherisches Styrol-Butadien-Acrylat Copolymer durch lebende radikalische Polymerisation bereitgestellt wird. Der hierfür notwendige Initiator kann unter anderem ein RAFT-Agens sein.

Die US 2014/0343192 A1 offenbart ein Verfahren zur Herstellung eines thermoplastischen Block Copolymers oder eines thermoplastischen statistischen Copolymers mittels RAFT aus einem radikalisch polymerisierbaren Monomer mit einem radikalisch polymerisierbaren.

Die EP 2851377 A1 offenbart ein Triblock-Copolymer, welches mittels RAFT in einer Eintopf-Reaktion hergestellt ist.

Die US 2014/0148554 A1 offenbart einen Luftreifen, der wenigstens eine Komponente umfasst, wobei die Komponente ein Polymerblend aus einem Copolymer und einem weiteren Polymer enthält. Die Polymere können Bestandteile, insbesondere funktionelle Gruppen, aufweisen, die auf einer Thiocarbonylthio-RAFT Reaktion basieren.

Die US 2013/0165587 A1 offenbart ebenfalls Polymere, welche u. a. terminale funktionelle Gruppen aufweisen können, die mittels RAFT eingeführt wurden.

Die US 7528204 B2 offenbart ein Emulsionspolymerisations-Verfahren, welches nach Wahl des Initiators hierfür u. a. eine RAFT Reaktion sein kann.

Die EP 1801158 A1 offenbart ein Verfahren zur Herstellung eines Latex unter Verwendung eines Poly(4-Vinylpyridin)-Makro-RAFT-Agenzes.

Die US 2012/0004381 A1 offenbart eine RAFT Polymerisation von ethylenisch ungesättigten Monomeren.

Die WO 2012/069403 A2 offenbart ein Verfahren zur Herstellung von Polymerfunktionalisierten Füllstoffpartikeln, wobei von der Füllstoffoberfläche aus eine RAFT-Polymerisation erfolgt.

Auch bei kontrollierter radikalischer Polymerisation entstehen mit den im Stand der Technik bekannten RAFT-Agenzien Polymere, die nach dem Einmischen in eine Kautschukmischung, insbesondere eine schwefelvernetzbare Kautschukmischung für Fahrzeugluftreifen, Gurte, Riemen oder Schläuche, und der Vulkanisation (Schwefelvernetzung) eine Vielzahl von freien Kettenenden *(engl.* "dangling ends") aufweisen. Je größer die Anzahl an freien Kettenenden, desto größer ist der Energieverlust und damit der Wärmeaufbau in der Kautschukmischung, da die freien Polymerkettenenden besonders beweglich sind und Energie in Bewegungsenergie umwandeln. Die Kautschukmischung wirkt daher energiedämpfend, was sich z. B. bei der Anwendung im Fahrzeugreifen negativ auf dessen Rollwiderstand auswirkt.

Der Erfindung liegt daher nun auf Basis des Standes der Technik die Aufgabe zu Grunde, ein RAFT-Agens bereitzustellen, mit dem ein Polymer hergestellt werden kann, mit dem in einer vulkanisierten Kautschukmischung eine Verbesserung des Rollwiderstandsverhaltens erzielt wird.

Gelöst wird diese Aufgabe erfindungsgemäß durch das RAFT-Agens gemäß Formel I):

I) Z-C(=S)-S-R-S-P,

wobei Z eine für RAFT-Polymerisation typische Z-Gruppe ist und ausgewählt ist aus a) Phenyl, b) Phenoxy, c) Alkoxy mit 1 bis 30 Kohlenstoffatomen, d) Alkyl mit 1 bis 30 Kohlenstoffatomen, e) S-Alkyl mit 1 bis 30 Kohlenstoffatomen, wobei die Anbindung an den Rest -C(=S)-S-R-S-P des RAFT-Agens über das Schwefelatom erfolgt, f) Heterozyklischen Gruppen, g) Alkyl(Phenyl)Amino mit 1 bis 30 Kohlenstoffatomen, wobei die Anbindung an den Rest -C(=S)-S-R-S-P des RAFT-Agens über das Stickstoffatom erfolgt, h) Dialkylamino mit 1 bis 30 Kohlenstoffatomen in jeder Alkylkette, wobei bei allen Gruppen die Anbindung an den Rest -C(=S)-S-R-S-P des RAFT-Agens über das Stickstoffatom erfolgt und wobei die beiden Alkylgruppen gleich oder verschieden voneinander sein können, und
wobei R eine für RAFT-Polymerisation typische R-Gruppe ist und ausgewählt ist aus a) Cyanoisopropyl, b) 2-Phenylpropan-2-yl, c) Cyano(Phenyl)Methyl, d) 1-Ethoxy-2-Methyl-1-Oxopropan-2-yl, e) 2,4,4-Trimethylpentan-2-yl, f) 1-Cyanoethyl, g) 1-Phenylethy, h) *tert-Butyl,* i) Cyanomethyl, j) Benzyl und k) Polymethacrylate, die synthesebedingt eine Carbamat-Gruppe oder eine Dithiocarbamat-Gruppe aufweisen können, wobei die Anbindung an den Rest Z-C(=S)-S- des RAFT-Agens über das sekundäre Kohlenstoffatom der ersten Methacrylat-Einheit der Polymethacrylat-Gruppe erfolgt, und
wobei C ein Kohlenstoffatom ist, und
wobei S ein Schwefelatom ist, und
wobei P eine Schutzgruppe ist, die ausgewählt ist aus der Gruppe bestehend aus
S(=O)₂-R¹ mit R¹ = Alkyl, Benzyl oder Phenyl und
S-C(=S)-N-R²R³ mit R² und R³ = Alkyl, Benzyl oder Phenyl und
C(=O)-R⁴ mit R⁴ = Alkyl und
N-R⁵R⁶ mit R⁵ = Wasserstoffatom (H), Alkyl, Benzyl oder Phenyl und
   R⁶ = Alkyl, Benzyl oder Phenyl und
SiR⁷R⁸R⁹ mit R⁷, R⁸ und R⁹ = Alkyl oder Benzyl und
S(=O)₂-OM mit M = Na, K oder H.

Die Verbindung gemäß Formel I) weist mit dem Molekülteil

Z-C(=S)-S-R

die typischen Merkmale eines RAFT-Agens auf.

Erfindungsgemäß weist die beanspruchte Verbindung nun zudem an der R-Gruppe eine -S-P, und damit eine geschützte Mercaptogruppe auf, die später bei der Vulkanisation der damit hergestellten Polymere entschützt wird, sodass das Schwefelatom dieser Mercaptogruppe an der Vulkanisation teilnehmen kann. Somit ist dieses Kettenende des Polymers nach der Vulkanisation an einem Netzknoten beteiligt, sodass es nicht als freies, energiedämpfendes Kettenende vorliegt.

Im Rahmen der vorliegenden Erfindung ist unter Ausdrücken wie "mit dem RAFT-Agens hergestellten Polymer" zu verstehen, dass die Polymerisation zur Herstellung des Polymers als RAFT-Polymerisation unter Verwendung des genannten Agens inkl. der RAFTtypischen Reaktionsbedingungen erfolgt.

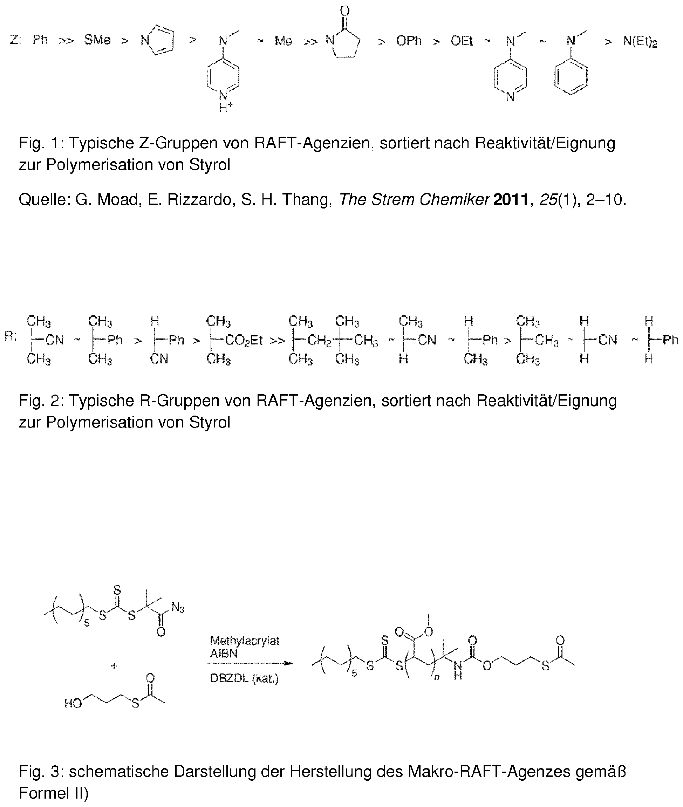

Die typischen Z-Gruppen sind die oben genannten und beinhalten z. B. die in Fig. 1 abgebildeten chemischen Gruppen, sind aber nicht auf diese beschränkt. Die in Fig. 1 gezeigten Gruppen enthaltend Heteroatome sind jeweils so dargestellt, dass eine Valenz an einem der Heteroatome fehlt. Die Anbindung an den Rest -C(=S)-S-R-S-P des RAFT-Agens erfolgt dann jeweils über das Heteroatom.

Die typischen R-Gruppen sind die oben genannten und beinhalten z. B. die in Fig. 2 abgebildeten chemischen Gruppen, sind aber nicht auf diese beschränkt. Die in Fig. 2 gezeigten Gruppen sind so dargestellt, dass jeweils eine Valenz an dem zentralen Kohlenstoffatom fehlt (da alle vorhandenen C-H-Bindungen angezeigt sind), sodass die Anbindung an den Rest Z-C(=S)-S- des RAFT-Agens an das genannte zentrale Kohlenstoffatom erfolgt. Zur Anbindung an -S-P des Agens gemäß Formel I) ist eine weitere freie Valenz nötig, die formell z. B. und bevorzugt durch Abspaltung eines der Wasserstoffatome der aufgeführten Gruppen entsteht.

In den Fig. 1 und 2 bedeutet Ph = Phenyl, Me = Methyl, Et = Ethyl. Die sonstigen Buchstaben stellen die jeweiligen Symbole der chemischen Elemente dar.

Sowohl die Z-Gruppen als auch R-Gruppen können neben den beispielhaft in Fig. 1 bzw. 2 aufgeführten Gruppen zusätzliche Molekülteile, die als sogenannte Spacer fungieren, aufweisen, solange sie unter die obigen Auflistungen der Gruppen fallen. Spacer dienen als eine Art "Abstandshalter" und sind bevorzugt Alkylgruppen oder Alkanoylgruppen mit 1 bis 10, bevorzugt 3 bis 10 Kohlenstoffatomen.

Auch sämtliche in der Veröffentlichung G. Moad, E. Rizzardo, S.H. Thang, Polymer 2008, 49(5), 1079-1131 offenbarten R- und Z-Gruppen sind denkbar, solange sie unter die obigen Auflistungen fallen.

Erfindungsgemäß ist die Z-Gruppe ausgewählt aus
a) Phenyl (Ph in Fig. 1 gezeigt),
b) Phenoxy (OPh in Fig. 1 gezeigt),
c) Alkoxy (O-Alkyl) mit 1 bis 30 Kohlenstoffatomen, besonders bevorzugt 1 bis 20 Kohlenstoffatomen, wobei die Alkyl ab 3 Kohlenstoffatomen verzweigt oder unverzweigt sein können und bevorzugt unverzweigt sind, z. B. OEt mit 2 Kohlenstoffatomen (s. Fig. 1),
d) Alkyl mit 1 bis 30 Kohlenstoffatomen, besonders bevorzugt 1 bis 20 Kohlenstoffatomen, wobei die Alkyl ab 3 Kohlenstoffatomen verzweigt oder unverzweigt sein können und bevorzugt unverzweigt sind, z. B. Methyl (Me s. Fig. 1)
e) S-Alkyl mit 1 bis 30 Kohlenstoffatomen, besonders bevorzugt 1 bis 20 Kohlenstoffatomen, wobei die Anbindung an den Rest -C(=S)-S-R-S-P des RAFT-Agens über das Schwefelatom erfolgt, wobei die Alkyl ab 3 Kohlenstoffatomen verzweigt oder unverzweigt sein können und bevorzugt unverzweigt sind, z. B. SMe, also S-Methyl mit 1 Kohlenstoffatom (in Fig. 1 gezeigt), oder S-C₁₂H₂₅ wie in Formel II) gezeigt (s. unten)
f) Heterozyklische Gruppen, wie insbesondere Pyrrolyl, z. B. 1H-Pyrrolyl-1-yl (s. Fig. 1), oder von Pyridin abgeleitete Gruppen wie N-Methyl-N-(4-Pyridinyl) in der protonierten Form Methyl(Pyridin-1-ium-4-yl)amino oder deprotonierten Form Methyl(Pyridin-4-yl)amino (s. Fig. 1) oder von 2-Oxopyrrolidin abgeleitete Gruppen wie 2-Oxopyrrolidin-1-yl (s. Fig. 1),
g) Alkyl(Phenyl)Amino mit 1 bis 30 Kohlenstoffatomen besonders bevorzugt 1 bis 20 Kohlenstoffatomen in der Alkylgruppe, wobei die Anbindung an den Rest -C(=S)-S-R-S-P des RAFT-Agens über das Stickstoffatom erfolgt, und wobei die Alkyl ab 3 Kohlenstoffatomen verzweigt oder unverzweigt sein können und bevorzugt unverzweigt sind, z. B. MethylPhenylamino (s. Fig. 1),
h) Dialkylamino mit 1 bis 30, besonders bevorzugt 1 bis 20, ganz besonders bevorzugt 1 bis 10 und wiederum besonders bevorzugt 1 bis 5 Kohlenstoffatomen in jeder Alkylkette, wobei die Alkylgruppen unabhängig voneinander ab 3 Kohlenstoffatomen verzweigt oder unverzweigt sein können und bevorzugt unverzweigt sind, wobei bei allen Gruppen die Anbindung an den Rest -C(=S)-S-R-S-P des RAFT-Agens über das Stickstoffatom erfolgt und wobei die beiden Alkylgruppen gleich oder verschieden voneinander sein können, wie z. B. Diethylamino (s. Fig. 1).

Erfindungsgemäß ist die R-Gruppe ausgewählt aus
a) Cyanoisopropyl (2-Cyanopropan-2-yl wie in Fig. 2 gezeigt),
b) 2-Phenylpropan-2-yl (Cumyl wie in Fig. 2 gezeigt),
c) Cyano(Phenyl)Methyl (wie in Fig. 2 gezeigt),
d) 1-Ethoxy-2-Methyl-1-Oxopropan-2-yl (wie in Fig. 2 gezeigt),
e) 2,4,4-Trimethylpentan-2-yl (wie in Fig. 2 gezeigt),
f) 1-Cyanoethyl (wie in Fig. 2 gezeigt),
g) 1-Phenylethy (wie in Fig. 2 gezeigt),
h) *tert*-Butyl (wie in Fig. 2 gezeigt),
i) Cyanomethyl (wie in Fig. 2 gezeigt),
j) Benzyl (wie in Fig. 2 gezeigt),
k) Polymethacrylate, die synthesebedingt eine Carbamat-Gruppe oder eine Dithiocarbamat-Gruppe aufweisen können, wobei die Anbindung an den Rest Z-C(=S)-S- des RAFT-Agens über das sekundäre Kohlenstoffatom der ersten Methacrylat-Einheit der Polymethacrylat-Gruppe erfolgt, wie z. B. die in Formel II) gezeigte Polymethacrylat-Carbamat-Gruppe (s. in Fig. 3 R-entsprechender Molekülteil des rechten Moleküls), bei der die Anbindung an den Teil -S-P des Agens über die vorhandene Carbamat-Gruppe erfolgt.

RAFT-Agenzien, die als R-Gruppe Vertreter der unter k) genannten Gruppen aufweisen, sind Makro-RAFT-Agenzien, s. unten.

Die in Formel I) genannten Reste R¹ bis R⁹ der Schutzgruppe P können wie oben aufgeführt Alkylgruppen sein. Hierbei sind 1 bis 10 Kohlenstoffatome bevorzugt. In Formel I) ist O = Sauerstoffatom, N = Stickstoffatom, Na = Natrium, wobei es in Form von Na⁺ vorliegt, K = Kalium, wobei es in Form von K⁺ vorliegt.

Gemäß einer besonders bevorzugten Ausführungsform der Erfindung handelt es sich bei dem RAFT-Agens um die Verbindung gemäß Formel II):

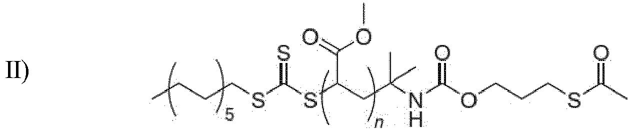

Hierbei weist das RAFT-Agens den erfindungsgemäßen Teil S-C(=O)-CH₃ als geschützte Mercaptogruppe auf.

Die Verbindung II) zählt zu der Klasse der Makro-RAFT-Agenzien mit n = bevorzugt 13 bis 22, insbesondere z. B. 15,3 oder 18,5. Die Verbindung gemäß Formel II) weist somit bevorzugt ein Zahlenmittel der Molmasse (bzw. der Molmassenverteilung) Mn gemäß GPC von 1600 bis 2365 g/mol,
insbesondere z. B. 1797 g/mol bzw. 2070 g/mol auf.

Die Verbindung II) weist bevorzugt eine Polydispersität (Mw/Mn) von 1,2 bis 1,4, insbesondere z. B. 1,35, auf. Mw stellt hierbei das Gewichtsmittel der Molmassenverteilung gemäß GPC dar.

Das Agens gemäß Formel II) wird hergestellt durch die Reaktion eines Azid-haltigen RAFT-Agens (der Einfachheit halber abgekürzt als RAFT-N₃) mit einem Alkohol, der eine geschützte Mercaptogruppe aufweist, wie in Fig. 3 dargestellt. Hierbei ist AIBN die Abkürzung der chemischen Verbindung Azobis(isobutyronitril).

DBZDL ist die Abkürzung der chemischen Verbindung Dibutylzinndilaurat, welches als Katalysator bei der Reaktion dient. Die Reaktion gemäß Fig. 3 erfolgt über 20 Stunden bei 65 °C, wobei die Molverhältnisse der genannten Verbindungen folgendermaßen betragen: 90,74 Mol.-% Methylacrylat zu 2,27 Mol.-% RAFT-N₃ zu 6,36 Mol-% Alkohol zu 0,41 Mol.-% DBZDL zu 0,22 Mol.-% AIBN.

Für die Bestimmung der Molmasse bzw. der Molmassenverteilung mittels GPC gelten im Rahmen der vorliegenden Erfindung folgende Messbedingungen: SEC Analysis Systems 1260 Infinity von PSS Agilent mit: PSS Agilent Technologies 1260 Iso Pump G1310B (HPLC-Pumpe), einem Agilent 1260 ALS G1329B Autosampler, einem Agilent 1260 ALS Injektor, einer Vorsäule (PSS SDV, 8 x 50 mm, Partikelgröße 5 µm), drei Trennsäulen (PSS SDV, 8 x 300 mm, Partikelgröße: 5 µm, Porengröße 10⁵ (zehn hoch fünf) Å, 10³ (zehn hoch drei) Å und 10² (zehn hoch zwei) Å) und den Detektoren; UV-Detektor PSS Agilent Technologies 1260 VWDVL bei einer Wellenlänge von 310 nm sowie der RI-Detektor PSS Agilent Technologies 1260 RID benutzt; Laufmittel THF (HPLC-grade) mit Toluol (> 99,7 %, trocken) als interner Standard (Fließgeschwindigkeit 1,0 mL/min bei 35 °C). Das System wird mit Polystyrol-Standards mit niedriger Polydispersität von PSS kalibriert. Zur Auswertung wird die Software PSS WinGPC verwendet. Die detektierten Intensitäten werden auf 1 normiert und, sofern nicht anders angegeben, das Signal des RI-Detektors dargestellt.

Eine weitere erfindungsgemäße Verbindung, die die oben gestellte Aufgabe löst, ist das RAFT-Agens gemäß Formel III)

III) P-S-Z-C(=S)-S-R-S-P ,

wobei für P, S, Z, C, R sämtliche Ausführungen zu Formel I) gelten, und zwar inklusive der Beschreibung der möglichen Reste R¹ bis R⁹ sowie der Z- und R-Gruppen.

Die Verbindung gemäß Formel III) weist somit an beiden Molekülenden eine geschützte Mercaptogruppe auf, womit je nach Polymerisationsbedingungen an beiden Kettenenden des damit hergestellten Polymers ein Schwefelatom vorliegt, welches an der Vulkanisation beteiligt ist, sodass die Zahl der freien Kettenenden weiter reduziert werden kann.

Ein weiterer Gegenstand der vorliegenden Erfindung besteht in einem Verfahren zur Polymerisation von Alkenen und/oder Dienen und/oder Vinyl-Verbindungen und/oder Vinyliden-Verbindungen unter Verwendung wenigstens eines oben beschriebenen RAFT-Agens. Ein weiterer Gegenstand der vorliegenden Erfindung besteht somit in einem Verfahren zur Herstellung eines Polymers aus wenigstens einem Monomer ausgewählt aus Alkenen und/oder Dienen und/oder Vinyl-Verbindungen und/oder Vinyliden-Verbindungen unter Verwendung wenigstens eines oben beschriebenen RAFT-Agens. Das Verfahren zur Polymerisation ist hierbei eine RAFT-Polymerisation unter Verwendung wenigstens eines der oben beschriebenen RAFT-Agenzien.

Im Rahmen der vorliegenden Erfindung werden unter Dienen gemäß Römpp Online ungesättigte aliphatische und cycloaliphatische Kohlenwasserstoffe, die im Molekül zwei Doppelbindungen enthalten, verstanden. Bevorzugt sind die beiden Doppelbindungen konjugiert. Bevorzugt ist das konjugierte Dien ausgewählt aus der Gruppe enthaltend, besonders bevorzugt bestehend aus, 1,3-Butadien (Butadien) und/oder 2-Methylbuta-1,3-dien (Isopren = 2-(C₁-C₅-Alkyl)-1,3-Butadien) und/oder 2,3-Dimethyl-1,3-Butadien und/oder 1,3-Pentadien und/oder 2,4-Hexadien und/oder 1,3-Hexadien und/oder 1,3-Heptadien und/oder 1,3-Octadien und/oder 2-Methyl-2,4-Pentadien und/oder Cyclopentadien und/oder 2,4-Hexadien und/oder 1,3-Cyclooctadien und/oder 2-Chlor-1,3-butadien (Chloropren).

Besonders bevorzugte Diene sind hierbei Isopren, Butadien und Chloropren.

Alkene, die als Monomere an der Polymerisation beteiligt sein können, sind aliphatische Verbindungen mit einer Doppelbindung, wie insbesondere Ethen, Propen, Buten, Penten, Hexen.

Der Begriff "Vinyl-Verbindung" umfasst im Rahmen der vorliegenden Erfindung alle chemischen Verbindungen, die wenigstens eine Vinyl-Gruppe aufweisen, wie Acrylate, Methacrylate, Acrylsäure, Methacrylsäure, Acrylnitril, sowie vinylaromatische Verbindungen.

Gemäß einer bevorzugten Ausführungsform der Erfindung handelt es sich bei der Vinyl-Verbindung zumindest um wenigstens eine Vinyl-Verbindung, die außer der Vinyl-Gruppe wenigstens eine weitere ungesättigte Gruppe Kohlenstoffgruppe aufweist, wie insbesondere eine Doppelbindung oder einen aromatischen Rest.

Gemäß einer besonders bevorzugten Ausführungsform der Erfindung handelt es sich bei der Vinyl-Verbindung zumindest um wenigstens eine vinylaromatische Verbindung.

Der Begriff "vinylaromatische Verbindung" umfasst im Rahmen der vorliegenden Erfindung monovinylaromatische Verbindungen, d.h. Verbindungen, bei denen nur eine Vinylgruppe an eine aromatische Gruppe gebunden ist, sowie vinylaromatische Verbindungen, bei denen zwei oder mehr Vinylgruppen an eine aromatische Gruppe gebunden sind.

Als vinylaromatische Verbindung ist jede dem Fachmann bekannte denkbar. Bevorzugt ist die vinylaromatische Verbindung ausgewählt aus der Gruppe enthaltend,
besonders bevorzugt bestehend aus, Styrol und/oder C₁₋₄-Alkylsubstituierte Styrole und/oder Stilben und/oder Vinylbenzyldimethylamin und/oder (4-Vinylbenzyl)Dimethylaminoethylether und/oder N,N-Dimethylaminoetyhlstyrol und/oder tert-Butoxystyrol und/oder Vinylpyridin und/oder divinylaromatische Verbindungen.

Bei den C₁₋₄-Alkylsubstituierten Styrolen kann es sich beispielsweise um 2-Methylstyrol und/oder 3-Methylstyrol und/oder 4-Methylstyrol und/oder 2,4-Dimethylstyrol und/oder 2,4,6-Trimethylstyrol und/oder alpha-Methylstyrol und/oder 2,4-Diisopropylstyrol und/oder 4-tert-Butylstyrol handeln.

Der Begriff "C₁₋₄-Alkylsubstituiert" bedeutet hierbei, dass ein Alkyl-Rest mit 1 bis 4 Kohlenstoffatomen als Substituent eines Wasserstoffatoms vorhanden ist.

Bei den divinylaromatische Verbindungen kann es sich beispielsweise um 1,2-Divinylbenzol und/oder 1,3-Divinylbenzol und/oder 1,4-Divinylbenzol handeln.

Unter Vinyliden-Verbindungen werden im Rahmen der vorliegenden Erfindung gemäß Römpp Online chemische Verbindungen verstanden, die die über eine Doppelbindung verknüpfte Atomgruppierung R₁R₂=C=CH₂ aufweisen, wie beispielsweise Cl₂C=CH₂ oder F₂C=CH₂.

Gemäß einer Ausführungsform der Erfindung ist es bevorzugt, dass das Alken ausgewählt ist aus der Gruppe bestehend aus Ethen, Propen, Buten, Penten und/oder Hexen, und das Dien ausgewählt ist aus der Gruppe bestehend aus 1,3-Butadien und/oder 2-Methylbuta-1,3-dien und/oder 2,3-Dimethyl-1,3-Butadien und/oder 1,3-Pentadien und/oder 2,4-Hexadien und/oder 1,3-Hexadien und/oder 1,3-Heptadien und/oder 1,3-Octadien und/oder 2-Methyl-2,4-Pentadien und/oder Cyclopentadien und/oder 2,4-Hexadien und/oder 1,3-Cyclooctadien und/oder 2-Chlor-1,3-butadien, und die Vinyl-Verbindung ein Acrylat und/oder Methacrylate und/oder Acrylsäure und/oder Methacrylsäure und/oder Acrylnitril und/oder eine vinylaromatische Verbindung ist, die ausgewählt ist aus der Gruppe bestehend aus Styrol und/oder 2-Methylstyrol und/oder 3-Methylstyrol und/oder 4-Methylstyrol und/oder 2,4-Dimethylstyrol und/oder 2,4,6-Trimethylstyrol und/oder alpha-Methylstyrol und/oder 2,4-Diisopropylstyrol und/oder 4-tert-Butylstyrol und/oder Stilben und/oder Vinylbenzyldimethylamin und/oder (4-Vinylbenzyl)Dimethylaminoethylether und/oder N,N-Dimethylaminoetyhlstyrol und/oder tert-Butoxystyrol und/oder Vinylpyridin und/oder 1,2-Divinylbenzol und/oder 1,3-Divinylbenzol und/oder 1,4-Divinylbenzol.

Das Verfahren zur RAFT-Polymerisation unter Verwendung wenigstens eines der oben beschriebenen RAFT-Agenzien ist im Folgenden anhand des Beispiels der Polymerisation von Styrol unter Verwendung des RAFT-Agens gemäß Formel II) beschrieben.

Das Verfahren ist nicht auf Styrol beschränkt, sondern kann erfindungsgemäß zur Herstellung aller Polymere aus den oben beschriebenen Monomeren verwendet werden, inkl. zur Herstellung von Copolymeren aus drei oder mehr verschiedenen Monomeren.

Die Verbindung gemäß Formel II) mit Mn = 1797 g/mol und einer Polydispersität von 1,35 wurde in einer Styrol-Polymerisation eingesetzt. Für die mittlere Molmasse Mn des RAFT-Agens wurde die Styrol-Kalibrierung der GPC mit Hilfe von Mark-Houwink-Koeffizienten an ein Methylacrylat-Polymer angepasst. Dies diente dem Zweck eine möglichst korrekte Molmasse des polymeren RAFT-Agens zu messen, mit der die Konzentrationen der daran anschließenden Styrol-Polymerisation korrekt berechnet werden konnte.

Bei der RAFT-Polymerisation wurden
99,66 Mol.-% Styrol und
0,05 Mol.-% der Verbindung gemäß Formel II) mit Mn = 1797 g/mol und einer Polydispersität von 1,35 und
0,29 Mol.-% AIBN verwendet.

Die Polymerisation erfolgte bei 60 °C.

Es wurde ein RAFT-polymerisiertes Styrol hergestellt, welches ein Mn von 5863 g/mol und eine Polydispersität von 1,21 aufweist. Das Mn des hergestellten Polystyrols wurde mittels GPC mit einer Styrol-Kalibrierung bestimmt.

Ein weiterer Gegenstand der vorliegenden Erfindung besteht in einem Polymer, welches durch das Verfahren hergestellt ist. Beispielweise handelt es sich um ein Polystyrol, welches wie oben beschrieben unter Verwendung des beispielhaften Agens II) hergestellt wurde.

Bei dem erfindungsgemäßen Polymer kann es sich auch um ein Copolymer aus drei oder mehr verschiedenen Monomeren handeln.

Bevorzugte Polymere, die mit dem erfindungsgemäßen Verfahren hergestellt werden, sind neben Polystyrol insbesondere Polyisopren (IR, Isopren-Kautschuk), Polybutadien (BR, Butadien-Kautschuk), Styrol-Butadien-Copolymer (SBR), Chloropren-Kautschuk (CR), Nitrilkautschuk (NBR, Copolymerisation von Acrylnitril und Buta-1,3-dien), hydrierter Nitrilkautschuk (HNBR), Styrol-Isopren-Copolymere (SIR), Styrol-Isopren-Butadien-Copolymere (SIBR), Ethylen-Propylen-Elastomere (EPM) wie Ethylen-Propylen-Copolymerisat (EPM), EPDM-Kautschuk (Terpolymerisate aus Ethen, Propen und einem nicht konjugierten Dien).

Die erfindungsgemäßen Polymere weisen hierbei im Unterschied zum Stand der Technik an wenigstens einem Kettenende die geschützte Mercaptogruppe S-P, wie in Formel I) und III) gezeigt, auf.

Das erfindungsgemäße RAFT-Agens bleibt somit nach der erfolgten RAFT-Polymerisation an den Kettenenden der erfindungsgemäßen Polymere. Hierbei verbleibt wenigstens der Molekülteil -R-S-P des RAFT-Agens am Anfang der Polymerkette und damit an einem ersten Kettenende. Der weitere Molekülteil Z-C(=S)-S- verbleibt gemäß einer Ausführungsform der Erfindung ebenfalls an der Polymerkette, und zwar am Ende der Polymerkette und damit an dem zweiten Kettenende.

Ein weiterer Gegenstand der vorliegenden Erfindung besteht in einer schwefelvernetzbaren Kautschukmischung, die wenigstens eines der hergestellten Polymere enthält.

Die erfindungsgemäße schwefelvernetzbare Kautschukmischung enthält wenigstens eines der hergestellten Polymere und kann zudem zusätzlich wenigstens einen im Stand der Technik bekannten Dienkautschuk enthalten.

Als Dienkautschuke werden Kautschuke bezeichnet, die durch Polymerisation oder Copolymerisation von Dienen und/oder Cycloalkenen entstehen und somit entweder in der Hauptkette oder in den Seitengruppen C=C-Doppelbindungen aufweisen.

Bei dem wenigstens einen Dienkautschuk handelt es sich um natürliches Polyisopren und/oder synthetisches Polyisopren und/oder Polybutadien (Butadien-Kautschuk) und/oder unfunktionalisiertes Styrol-Butadien-Copolymer (Styrol-Butadien-Kautschuk) und/oder epoxidiertes Polyisopren und/oder Styrol-Isopren-Kautschuk und/oder HalobutylKautschuk und/oder Polynorbornen und/oder Isopren-Isobutylen-Copolymer und/oder Ethylen-Propylen-Dien-Kautschuk und/oder Nitril-Kautschuk und/oder Chloropren-Kautschuk und/oder Acrylat-Kautschuk und/oder Fluor-Kautschuk und/oder SilikonKautschuk und/oder Polysulfid-Kautschuk und/oder Epichlorhydrin-Kautschuk und/oder Styrol-Isopren-Butadien-Terpolymer und/oder hydrierten Acrylnitrilbutadien-Kautschuk und/oder hydrierten Styrol-Butadien-Kautschuk.

Insbesondere Nitrilkautschuk, hydrierter Acrylnitrilbutadienkautschuk, Chloroprenkautschuk, Butylkautschuk, Halobutylkautschuk oder Ethylen-Propylen-Dien-Kautschuk kommen bei der Herstellung von technischen Gummiartikeln, wie Gurte, Riemen und Schläuche, und/oder Schuhsohlen zum Einsatz.

Die Begriffe "vulkanisiert" und "vernetzt" werden im Rahmen der vorliegenden Erfindung synonym verwendet.

Die erfindungsgemäße Kautschukmischung enthält ferner bevorzugt wenigstens einen Füllstoff wie Kieselsäure, Ruß sowie ggf. weitere bekannte polare und/oder unpolare Füllstoffe, wie Alumosilicate, Kreide, Kaolin, Stärke, Magnesiumoxid, Titandioxid und/oder Kautschukgele, sowie Kohlenstoffnanoröhrchen (carbon nanotubes (CNT) inklusive diskreter CNTs, sogenannte hollow carbon fibers (HCF) und modifizierte CNT enthaltend eine oder mehrere funktionelle Gruppen, wie Hydroxy-, Carboxy und CarbonylGruppen) und/oder Graphit und/oder Graphene und/oder sogenannte "carbon-silica dualphase filler".

Handelt es sich bei dem Füllstoff um wenigstens eine Kieselsäure, so enthält die Kautschukmischung bevorzugt 1 bis 300 phr, besonders bevorzugt 1 bis 200 phr, ganz besonders bevorzugt 1 bis150 phr, wenigstens einer Kieselsäure.

Handelt es sich bei dem Füllstoff um wenigstens einen Ruß, so enthält die Kautschukmischung bevorzugt 1 bis 200 phr, besonders bevorzugt 1 bis 170 phr und ganz besonders bevorzugt 1 bis 100 phr wenigstens eines Rußes.

Bei den Kieselsäuren kann es sich um die dem Fachmann bekannten Kieselsäuren, die als Füllstoff für Reifenkautschukmischungen geeignet sind, handeln. Besonders bevorzugt ist es allerdings, wenn eine fein verteilte, gefällte Kieselsäure verwendet wird, die eine Stickstoff-Oberfläche (BET-Oberfläche) (gemäß DIN ISO 9277 und DIN 66132) von 35 bis 350 m²/g, bevorzugt von 60 bis 260 m²/g, besonders bevorzugt von 120 bis 230 m²/g, und eine CTAB-Oberfläche (gemäß ASTM D 3765) von 30 bis 400 m²/g, bevorzugt von 60 bis 250 m²/g, besonders bevorzugt von 120 bis 230 m²/g, aufweist.

Enthält die Kautschukmischung Ruß, sind alle dem Fachmann bekannten Ruß-Typen denkbar. Bevorzugt wird jedoch ein Ruß eingesetzt, der eine Jodadsorptionszahl gemäß ASTM D 1510 von 30 bis 180 g/kg, bevorzugt 30 bis 130 kg/g, und eine DBP-Zahl gemäß ASTM D 2414 von 80 bis 200 ml/100 g, bevorzugt 100 bis 200 ml/100g, besonders bevorzugt 100 bis 180 ml/100g, aufweist.

Die erfindungsgemäße Kautschukmischung kann auch ein Gemisch zweier oder mehrerer der genannten Füllstoffe enthalten.

Zinkoxid gehört im Rahmen der vorliegenden Erfindung nicht zu den Füllstoffen, ist aber bevorzugt in Kombination mit Stearinsäure in der erfindungsgemäßen Kautschukmischung enthalten.

Weiterhin enthält die Kautschukmischung bevorzugt noch weitere Zusatzstoffe.

Weitere Zusatzstoffe beinhaltet im Wesentlichen - neben Zinkoxid (ZnO) und Stearinsäure -ggf. Silan-Kupplungsagenzien für die Anbindung von Kieselsäure an die Polymerketten der enthaltenen Kautschuke, Weichmacher, das Vulkanisationssystem aus Schwefel und/oder Schwefelspendern mit Hilfe von Vulkanisationsbeschleunigern, Ozonschutzmittel, Alterungsschutzmittel, Klebharze, Mastikationshilfsmittel und weitere Aktivatoren bzw. Verarbeitungshilfsmittel, wie z. B. Fettsäuresalze, wie z. B. Zinkseifen und Fettsäureester und deren Derivate, wie z. B. Zinkstearat, oder Zinkkomplexe wie z. B. Zinkethylhexanoat.

Als Silan-Kupplungsagenzien können dabei alle dem Fachmann für die Verwendung in Kautschukmischungen bekannten Silan-Kupplungsagenzien verwendet werden. Hierbei können ein oder mehrere verschiedene Silan-Kupplungsagenzien in Kombination miteinander eingesetzt werden. Die Kautschukmischung kann somit ein Gemisch verschiedener Silane enthalten.

Die Silan-Kupplungsagenzien reagieren mit den oberflächlichen Silanolgruppen der Kieselsäure oder anderen polaren Gruppen während des Mischens des Kautschuks bzw. der Kautschukmischung (in situ) oder bereits vor der Zugabe des Füllstoffes zum Kautschuk im Sinne einer Vorbehandlung (Vormodifizierung). Solche aus dem Stand der Technik bekannten Kupplungsagenzien sind bifunktionelle Organosilane, die am Siliciumatom mindestens eine Alkoxy-, Cycloalkoxy- oder Phenoxygruppe als Abgangsgruppe besitzen und die als andere Funktionalität eine Gruppe aufweisen, die gegebenenfalls nach Spaltung eine chemische Reaktion mit den Doppelbindungen des Polymers eingehen kann. Bei der letztgenannten Gruppe kann es sich z. B. um die folgenden chemischen Gruppen handeln:

-SCN, -SH, -NH₂ oder -Sₓ- (mit x = 2 bis 8).

So können als Silan-Kupplungsagenzien z. B. 3-Mercaptopropyltriethoxysilan, 3-Thiocyanato-propyltrimethoxysilan oder 3,3'-Bis(triethoxysilylpropyl)polysulfide mit 2 bis 8 Schwefelatomen, wie z. B. 3,3'-Bis(triethoxysilylpropyl)tetrasulfid (TESPT), das entsprechende Disulfid (TESPD) oder auch Gemische aus den Sulfiden mit 1 bis 8 Schwefelatomen mit unterschiedlichen Gehalten an den verschiedenen Sulfiden, verwendet werden. TESPT kann dabei beispielsweise auch als Gemisch mit Industrieruß (Handelsname X50S® der Firma Evonik) zugesetzt werden.

Bevorzugt wird ein Silan-Gemisch eingesetzt, welches zu 40 bis 100 Gew.-% Disulfide, besonders bevorzugt 55 bis 85 Gew.-% Disulfide und ganz besonders bevorzugt 60 bis 80 Gew.-% Disulfide enthält. Ein solches Gemisch ist z. B. unter dem Handelsnamen Si 261® der Firma Evonik erhältlich, welches z. B. in der DE 102006004062 A1 beschrieben ist. Auch geblockte Mercaptosilane, wie sie z. B. aus der WO 99/09036 bekannt sind, können als Silan-Kupplungsagens eingesetzt werden. Auch Silane, wie sie in der WO 2008/083241 A1, der WO 2008/083242 A1, der WO 2008/083243 A1 und der WO 2008/083244 A1 beschrieben sind, können eingesetzt werden. Verwendbar sind z. B. Silane, die unter dem Namen NXT (z. B. 3-(Octanoylthio)-1-Propyl-Triethoxysilan) in verschiedenen Varianten von der Firma Momentive, USA, oder solche, die unter dem Namen VP Si 363® von der Firma Evonik Industries vertrieben werden.

Ferner ist es denkbar, dass eines der oben genannten Mercaptosilane, insbesondere 3-Mercaptopropyltriethoxysilan, in Kombination mit Verarbeitungshilfsmitteln (die unten aufgeführt sind), insbesondere PEG-Carbonsäureester, eingesetzt werden.

Weiterhin kann die Kautschukmischung weitere Aktivatoren und/oder Agenzien für die Anbindung von Füllstoffen, insbesondere Ruß, enthalten. Hierbei kann es sich beispielsweise um die z. B. in der EP 2589619 A1 offenbarte Verbindung S-(3-Aminopropyl)Thioschwefelsäure und/oder deren Metallsalze handeln, wodurch sich insbesondere bei der Kombination mit wenigstens einem Ruß als Füllstoff sehr gute physikalische Eigenschaften der Kautschukmischung ergeben.

Der Mengenanteil der Gesamtmenge an weiteren Zusatzstoffen beträgt 3 bis 150 phr, bevorzugt 3 bis 100 phr und besonders bevorzugt 5 bis 80 phr.

Zu den im Rahmen der vorliegenden Erfindung verwendeten Weichmachern gehören alle dem Fachmann bekannten Weichmacher wie aromatische, naphthenische oder paraffinische Mineralölweichmacher, wie z. B. MES (mild extraction solvate) oder RAE (Residual Aromatic Extract) oder TDAE (treated distillate aromatic extract), oder Rubberto-Liquid-Öle (RTL) oder Biomass-to-Liquid-Öle (BTL) bevorzugt mit einem Gehalt an polyzyklischen Aromaten von weniger als 3 Gew.-% gemäß Methode IP 346 oder Rapsöl oder Faktisse oder Weichmacherharze, die nicht zu den oben genannten Klebharzen zählen, oder Flüssig-Polymere, deren mittleres Molekulargewicht (Bestimmung per GPC = gel permeation chromatography, in Anlehnung an BS ISO 11344:2004) zwischen 500 und 20000 g/mol liegt. Werden in der erfindungsgemäßen Kautschukmischung zusätzliche Flüssig-Polymere als Weichmacher eingesetzt, so gehen diese nicht als Kautschuk in die Berechnung der Zusammensetzung der Polymermatrix ein.

Die in dieser Schrift verwendete Angabe phr (parts per hundred parts of rubber by weight) ist dabei die in der Kautschukindustrie übliche Mengenangabe für Mischungsrezepturen.

Die Dosierung der Gewichtsteile der einzelnen Substanzen wird dabei stets auf 100 Gewichtsteile der gesamten Masse aller in der Mischung vorhandenen Kautschuke bezogen.

Die Vulkanisation der erfindungsgemäßen schwefelvernetzbaren Kautschukmischung wird in Anwesenheit von Schwefel und/oder Schwefelspendern mit Hilfe von Vulkanisationsbeschleunigern durchgeführt, wobei einige Vulkanisationsbeschleuniger zugleich als Schwefelspender wirken können. Dabei ist der Beschleuniger ausgewählt aus der Gruppe bestehend aus Thiazolbeschleunigern und/oder Mercaptobeschleunigern und/oder Sulfenamidbeschleunigern und/oder Thiocarbamatbeschleunigern und/oder Thiurambeschleunigern und/oder Thiophosphatbeschleunigern und/oder Thioharnstoffbeschleunigern und/oder Xanthogenat-Beschleunigern und/oder Guanidin-Beschleunigern.

Bevorzugt ist die Verwendung eines Sulfenamidbeschleunigers, der ausgewählt ist aus der Gruppe bestehend aus N-Cyclohexyl-2-benzothiazolsufenamid (CBS) und/oder N,N-Dicyclohexylbenzothiazol-2-sulfenamid (DCBS) und/oder Benzothiazyl-2-sulfenmorpholid (MBS) und/oder N-tert-Butyl-2-benzothiazylsulfenamid (TBBS).

Als schwefelspendende Substanz können dabei alle dem Fachmann bekannten schwefelspendenden Substanzen verwendet werden. Enthält die Kautschukmischung eine schwefelspendende Substanz, ist diese bevorzugt ausgewählt aus der Gruppe enthaltend z. B. Thiuramdisulfide, wie z. B. Tetrabenzylthiuramdisulfid (TBzTD) und/oder Tetramethylthiuramdisulfid (TMTD) und/oder Tetraethylthiuramdisulfid (TETD), und/oder Thiuramtetrasulfide, wie z. B. Dipentamethylenthiuramtetrasulfid (DPTT), und/oder Dithiophosphate, wie z. B.

DipDis (Bis-(Diisopropyl)thiophosphoryldisulfid) und/oder Bis(O,O-2-ethylhexyl-thiophosphoryl)Polysulfid (z. B. Rhenocure SDT 50®, Rheinchemie GmbH) und/oder Zinkdichloryldithiophosphat (z. B. Rhenocure ZDT/S®, Rheinchemie GmbH) und/oder Zinkalkyldithiophosphat, und/oder 1,6-Bis(N,N-dibenzylthiocarbamoyldithio)hexan und/oder Diarylpolysulfide und/oder Dialkylpolysulfide.

Auch weitere netzwerkbildende Systeme, wie sie beispielsweise unter den Handelsnamen Vulkuren®, Duralink® oder Perkalink® erhältlich sind, oder netzwerkbildende Systeme, wie sie in der WO 2010/049216 A2 beschrieben sind, können in der Kautschukmischung eingesetzt werden.

Ein weiterer Gegenstand der der vorliegenden Erfindung besteht in der Verwendung der beschriebenen schwefelvernetzbaren Kautschukmischung zur Herstellung eines Fahrzeugreifens. Damit ist ein weiterer Gegenstand der Erfindung auch ein Fahrzeugreifen, bei dessen Herstellung wenigstens eine erfindungsgemäße schwefelvernetzbare Kautschukmischung - enthaltend wenigstens ein erfindungsgemäßes Polymer hergestellt mit wenigstens einem erfindungsgemäßen RAFT-Agens - verwendet wurde.

Unter Fahrzeugreifen werden im Rahmen der vorliegenden Erfindung Fahrzeugluftreifen und Vollgummireifen, inklusive Reifen für Industrie- und Baustellenfahrzeuge, LKW-, PKW- sowie Zweiradreifen verstanden.

Gemäß einer bevorzugten Ausführungsform der Erfindung handelt es sich um einen Fahrzeugluftreifen.

Hierbei ist die Verwendung in allen Reifenbauteilen prinzipiell denkbar, wie insbesondere dem Laufstreifen und/oder der Seitenwand und/oder in wenigstens einem inneren Bauteil.

Als innere Reifenbauteile werden im Wesentlichen Squeegee, Innenseele (Innenschicht), Kernprofil, Gürtel, Schulter, Gürtelprofil, Karkasse, Wulstverstärker, Wulstprofil, Hornprofil und Bandage bezeichnet.

Kautschukmischungen der inneren Reifenbauteile sowie der Seitenwand werden auch als Body-Mischung bezeichnet.

Bevorzugt wird die erfindungsgemäße Kautschukmischung jedoch in Laufstreifen von Fahrzeugreifen verwendet, bevorzugt hierbei wenigstens in der Cap von Laufstreifen mit Cap/Base-Konstruktion.

Laufstreifen tragen in erheblichem Maße zum Rollwiderstand des Fahrzeugreifens bei.

Zur Verwendung in Fahrzeugreifen wird die Mischung als Fertigmischung vor der Vulkanisation bevorzugt in die Form eines Laufstreifens, bevorzugt wenigstens in die Form einer Laufstreifencap, gebracht und bei der Herstellung des Fahrzeugreifenrohlings wie bekannt aufgebracht. Der Laufstreifen, bevorzugt wenigstens die Laufstreifencap, kann aber auch in Form eines schmalen Kautschukmischungsstreifens auf einen Reifenrohling aufgewickelt werden. Bei zweigeteilten Laufstreifen (oberer Teil: Cap und unterer Teil: Base) kann die erfindungsgemäße Kautschukmischung sowohl für die Cap als auch für die Base verwendet werden.

Die Herstellung der erfindungsgemäßen Kautschukmischung zur Verwendung als Body-Mischung in Fahrzeugreifen erfolgt wie bereits für den Laufstreifen beschrieben. Der Unterschied liegt in der Formgebung nach dem Extrusionsvorgang bzw. dem Kalandrieren der Mischung. Die so erhaltenen Formen der noch unvulkanisierten Kautschukmischung für eine oder mehrere unterschiedliche Body-Mischungen dienen dann dem Aufbau eines Reifenrohlings.

Der Reifenrohling wird anschließend unter im Stand der Technik bekannten Bedingungen vulkanisiert.

Ein weiterer Gegenstand der vorliegenden Erfindung besteht in der Verwendung der beschriebenen schwefelvernetzbaren Kautschukmischung zur Herstellung eines Gurtes, Riemens oder Schlauches.

Zur Verwendung der erfindungsgemäßen Kautschukmischung in Riemen, Gurten und Schläuchen, insbesondere in Fördergurten, wird die extrudierte noch unvulkanisierte Mischung in die entsprechende Form gebracht und ggf. dabei oder nachher häufig mit Festigkeitsträgern, z. B. synthetische Fasern oder Stahlcorde, versehen. Zumeist ergibt sich so ein mehrlagiger Aufbau, bestehend aus einer und/oder mehrerer Lagen Kautschukmischung, einer und/oder mehrerer Lagen gleicher und/oder verschiedener Festigkeitsträger und einer und/oder mehreren weiteren Lagen dergleichen und/oder einer anderen Kautschukmischung.

## Patentansprüche

1. RAFT-Agens gemäß Formel I)
I) Z-C(=S)-S-R-S-P,
wobei Z eine für RAFT-Polymerisation typische Z-Gruppe ist und ausgewählt ist aus a) Phenyl, b) Phenoxy, c) Alkoxy mit 1 bis 30 Kohlenstoffatomen, d) Alkyl mit 1 bis 30 Kohlenstoffatomen, e) S-Alkyl mit 1 bis 30 Kohlenstoffatomen, wobei die Anbindung an den Rest -C(=S)-S-R-S-P des RAFT-Agens über das Schwefelatom erfolgt, f) Heterozyklischen Gruppen, g) Alkyl(Phenyl)Amino mit 1 bis 30 Kohlenstoffatomen, wobei die Anbindung an den Rest -C(=S)-S-R-S-P des RAFT-Agens über das Stickstoffatom erfolgt,
h) Dialkylamino mit 1 bis 30 Kohlenstoffatomen in jeder Alkylkette, wobei bei allen Gruppen die Anbindung an den Rest -C(=S)-S-R-S-P des RAFT-Agens über das Stickstoffatom erfolgt und wobei die beiden Alkylgruppen gleich oder verschieden voneinander sein können, und
wobei R eine für RAFT-Polymerisation typische R-Gruppe ist und ausgewählt ist aus a) Cyanoisopropyl, b) 2-Phenylpropan-2-yl, c) Cyano(Phenyl)Methyl, d) 1-Ethoxy-2-Methyl-1-Oxopropan-2-yl, e) 2,4,4-Trimethylpentan-2-yl, f) 1-Cyanoethyl, g) 1-Phenylethy, h) *tert-Butyl,* i) Cyanomethyl, j) Benzyl und k) Polymethacrylate, die synthesebedingt eine Carbamat-Gruppe oder eine Dithiocarbamat-Gruppe aufweisen können, wobei die Anbindung an den Rest Z-C(=S)-S- des RAFT-Agens über das sekundäre Kohlenstoffatom der ersten Methacrylat-Einheit der Polymethacrylat-Gruppe erfolgt, und
wobei C ein Kohlenstoffatom ist, und
wobei S ein Schwefelatom ist, und
wobei P eine Schutzgruppe ist, die ausgewählt ist aus der Gruppe bestehend aus
S(=O)₂-R¹ mit R¹ = Alkyl, Benzyl oder Phenyl und
S-C(=S)-N-R²R³ mit R² und R³ = Alkyl, Benzyl oder Phenyl und
C(=O)-R⁴ mit R⁴ = Alkyl und
N-R⁵R⁶ mit R⁵ = Wasserstoffatom (H), Alkyl, Benzyl oder Phenyl und
R⁶ = Alkyl, Benzyl oder Phenyl und
SiR⁷R⁸R⁹ mit R⁷, R⁸ und R⁹ = Alkyl oder Benzyl und
S(=O)₂-OM mit M = Na, K oder H.

2. RAFT-Agens nach Anspruch 1, **dadurch gekennzeichnet, dass** es sich um die Verbindung gemäß Formel II) handelt:

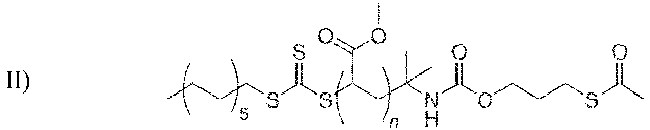

3. RAFT-Agens gemäß Formel III)
III) P-S-Z-C(=S)-S-R-S-P,
wobei für P, S, Z, C, R sämtliche Ausführungen zu Formel I) gelten.

4. Verfahren zur Polymerisation von Alkenen und/oder Dienen und/oder Vinyl-Verbindungen und/oder Vinyliden-Verbindungen unter Verwendung wenigstens eines RAFT-Agens nach einem der Ansprüche 1 bis 3.

5. Polymer **dadurch gekennzeichnet, dass** es durch ein Verfahren gemäß Anspruch 4 hergestellt ist.

6. Polymer nach Anspruch 5, **dadurch gekennzeichnet, dass** es sich um Polystyrol Polyisopren (IR, Isopren-Kautschuk), Polybutadien (BR, Butadien-Kautschuk), Styrol-Butadien-Copolymer (SBR), Chloropren-Kautschuk (CR), Nitrilkautschuk (NBR, Copolymerisation von Acrylnitril und Buta-1,3-dien), hydrierten Nitrilkautschuk (HNBR), Styrol-Isopren-Copolymer (SIR), Styrol-Isopren-Butadien-Copolymer (SIBR) und/oder Ethylen-Propylen-Elastomer (EPM) handelt.

7. Schwefelvernetzbare Kautschukmischung **dadurch gekennzeichnet, dass** sie wenigstens ein Polymer nach Anspruch 5 oder 6 enthält.

8. Verwendung einer schwefelvernetzbaren Kautschukmischung nach Anspruch 7 zur Herstellung eines Fahrzeugreifens.

9. Verwendung einer schwefelvernetzbaren Kautschukmischung nach Anspruch 7 zur Herstellung eines Gurtes, Riemens oder Schlauches.

## Claims

1. RAFT agent of formula I)
I) Z-C(=S)-S-R-S-P
where Z is a Z group typical of RAFT polymerization and is selected from a) phenyl, b) phenoxy, c) alkoxy having 1 to 30 carbon atoms, d) alkyl having 1 to 30 carbon atoms, e) S-alkyl having 1 to 30 carbon atoms, where the attachment to the -C(=S)-S-R-S-P radical of the RAFT agent is via the sulfur atom, f) heterocyclic groups, g) alkyl(phenyl)amino having 1 to 30 carbon atoms, where the attachment to the -C(=S)-S-R-S-P radical of the RAFT agent is via the nitrogen atom, h) dialkylamino having 1 to 30 carbon atoms in each alkyl chain, where, in all the groups, the attachment to the -C(=S)-S-R-S-P radical of the RAFT agent is via the nitrogen atom and where the two alkyl groups may be the same or different, and
where R is an R group typical of RAFT polymerization and is selected from a) cyanoisopropyl, b) 2-phenylpropan-2-yl, c) cyano(phenyl)methyl, d) 1-ethoxy-2-methyl-1-oxopropan-2-yl, e) 2,4,4-trimethylpentan-2-yl, f) 1-cyanoethyl, g) 1-phenylethyl, h) tert-butyl, i) cyanomethyl, j) benzyl, k) polymethacrylates which, as a result of the synthesis, may have a carbamate group or a dithiocarbamate group, where the attachment to the Z-C(=S)-S- radical of the RAFT agent is via the secondary carbon atom of the first methacrylate unit of the polymethacrylate group, and
where C is a carbon atom, and
where S is a sulfur atom, and
where P is a protecting group selected from the group consisting of
S(=O)₂-R¹ with R¹ = alkyl, benzyl or phenyl and
S-C (=S) -N-R²R³ with R² and R³ = alkyl, benzyl or phenyl and
C(=O)-R⁴ with R⁴ = alkyl and
N-R⁵R⁶ with R⁵ = hydrogen atom (H), alkyl, benzyl or phenyl and
R⁶ = alkyl, benzyl or phenyl and
SiR⁷R⁸R⁹ with R⁷, R⁸ and R⁹ = alkyl or benzyl and
S(=O)₂-OM with M = Na, K or H.

2. RAFT agent according to Claim 1, **characterized in that** the compound is that of formula II):

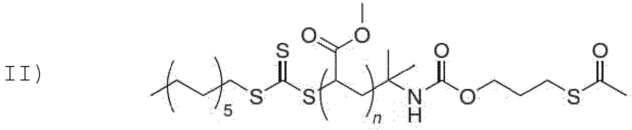

3. RAFT agent of formula III)
III) P-S-Z-C(=S)-S-R-S-P
where all the details given for formula I) are applicable to P, S, Z, C, R.

4. Method of polymerizing alkenes and/or dienes and/or vinyl compounds and/or vinylidene compounds using at least one RAFT agent according to any of Claims 1 to 3.

5. Polymer, **characterized in that** it has been prepared by a method according to Claim 4.

6. Polymer according to Claim 5, **characterized in that** it is polystyrene, polyisoprene (IR, isoprene rubber), polybutadiene (BR, butadiene rubber), styrene-butadiene copolymer (SBR), chloroprene rubber (CR), nitrile rubber (NBR, copolymerization of acrylonitrile and buta-1,3-diene), hydrogenated nitrile rubber (HNBR), styrene-isoprene copolymer (SIR), styrene-isoprene-butadiene copolymer (SIBR) and/or ethylene-propylene elastomer (EPM).

7. Sulfur-crosslinkable rubber mixture, **characterized in that** it comprises at least one polymer according to Claim 5 or 6.

8. Use of a sulfur-crosslinkable rubber mixture according to Claim 7 for production of a motor vehicle tyre.

9. Use of a sulfur-crosslinkable rubber mixture according to Claim 7 for production of a cord, belt or hose.

## Revendications

1. Agent RAFT selon la formule I)
**I)** **Z-C(=S)-S-R-S-P,**
dans laquelle Z représente un groupe Z caractéristique pour la polymérisation RAFT et est choisi parmi a) phényle, b) phénoxy, c) alcoxy comprenant 1 à 30 atomes de carbone, d) alkyle comprenant 1 à 30 atomes de carbone, e) S-alkyle comprenant 1 à 30 atomes de carbone, la liaison au radical -C(=S)-S-R-S-P de l'agent RAFT ayant lieu par l'intermédiaire de l'atome de soufre, f) groupes hétérocycliques, g) alkyl(phényl)amino comprenant 1 à 30 atomes de carbone, la liaison au radical -C(=S)-S-R-S-P de l'agent RAFT ayant lieu par l'intermédiaire de l'atome d'azote, h) dialkylamino comprenant 1 à 30 atomes de carbone dans chaque chaîne alkyle, la liaison au radical -C(=S)-S-R-S-P de l'agent RAFT de tous les groupes ayant lieu par l'intermédiaire de l'atome d'azote et les deux groupes alkyle pouvant être identiques ou différents l'un de l'autre et
R est un groupe R caractéristique pour la polymérisation RAFT et est choisi parmi a) cyano-isopropyle, b) 2-phénylpropan-2-yle, c) cyano(phényl)méthyle, d) 1-éthoxy-2-méthyl-1-oxopropan-2-yle, e) 2,4,4-triméthylpentan-2-yle, f) 1-cyanoéthyle, g) 1-phényléthyle, h) tert-butyle, i) cyanométhyle, j) benzyle et k) polyméthacrylates, qui peuvent présenter, suite à leur synthèse, un groupe carbamate ou un groupe dithiocarbamate, la liaison au radical Z-C(=S)-S- de l'agent RAFT ayant lieu par l'intermédiaire de l'atome de carbone secondaire du premier motif méthacrylate du groupe polyméthacrylate et
C représente un atome de carbone et
S représente un atome de soufre et
P représente un groupe de protection qui est choisi dans le groupe constitué par
S(=O)₂-R¹ où R¹ = alkyle, benzyle ou phényle et
S-C(=S)-N-R²R³ où R² et R³ = alkyle, benzyle ou phényle et
C(=O)-R⁴ où R⁴ = alkyle et
N-R⁵R⁶ où R⁵ = atome d'hydrogène (H), alkyle, benzyle ou phényle et R⁶ = alkyle, benzyle ou phényle et
SiR⁷R⁸R⁹ où R⁷, R⁸ et R⁹ = alkyle ou benzyle et
S(=O)₂-OM où M = Na, K ou H.

2. Agent RAFT selon la revendication 1, **caractérisé en ce qu'**il s'agit du composé selon la formule II) :

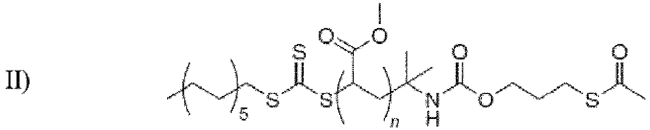

3. Agent RAFT selon la formule III)
**III)** **P-S-Z-C(=S)-S-R-S-P** ,
l'ensemble des explications pour la formule I) concernant P, S, Z, C, R étant d'application.

4. Procédé pour la polymérisation d'alcènes et/ou de diènes et/ou de composés de vinyle et/ou de composés de vinylidène à l'aide d'au moins un agent RAFT selon l'une quelconque des revendications 1 à 3.

5. Polymère, **caractérisé en ce qu'**il est préparé par un procédé selon la revendication 4.

6. Polymère selon la revendication 5, **caractérisé en ce qu'**il s'agit de polystyrène, de polyisoprène (IR, caoutchouc d'isoprène), de polybutadiène (BR, caoutchouc de butadiène), de copolymère de styrène-butadiène (SBR), de caoutchouc de chloroprène (CR), de caoutchouc de nitrile (NBR, copolymérisation d'acrylonitrile et de buta-1,3-diène), de caoutchouc de nitrile hydrogéné (HNBR), de copolymère de styrène-isoprène (SIR), de copolymère de styrène-isoprène-butadiène (SIBR) et/ou d'élastomère d'éthylène-propylène (EPM).

7. Mélange de caoutchouc réticulable par le soufre, **caractérisé en ce qu'**il contient au moins un polymère selon la revendication 5 ou 6.

8. Utilisation d'un mélange de caoutchouc réticulable par le soufre selon la revendication 7 pour la fabrication d'un pneumatique pour véhicule.

9. Utilisation d'un mélange de caoutchouc réticulable par le soufre selon la revendication 7 pour la fabrication d'une ceinture, d'une courroie ou d'un tuyau souple.
